# EUROPÄISCHE PATENTSCHRIFT

(11) **EP 0 628 781 B1**
(45) Veröffentlichungstag und Bekanntmachung des Hinweises auf die Patenterteilung: **21.10.1998**
(21) Anmeldenummer: 94107120.1
(22) Anmeldetag: 06.05.1994
(51) Int. Cl.: F41G 7/22, G02B 27/00

(54) **Zielsuchkopf für einen Flugkörper**
Homing head for aircraft
Autodirecteur pour missile

(30) Priorität: 12.05.1993 DE 4315855
(43) Veröffentlichungstag der Anmeldung: 14.12.1994
(73) Patentinhaber: Bodenseewerk Gerätetechnik GmbH, 88662 Überlingen (DE)
(72) Erfinder: Dähne, Claus, Dr., D-88662 Überlingen (DE); Uwira, Bernd, Dr., D-78464 Konstanz (DE)
(74) Vertreter: Wolgast, Rudolf, Dipl.-Chem. Dr.

(56) Entgegenhaltungen:
- EP-A- 0 482 353
- CA-A- 1 117 331
- GB-A- 2 188 507
- US-A- 4 142 696
- US-A- 4 717 822
- US-A- 4 804 249
- PHOTONICS SPECTRA, vol., no., 9.1992, page 125 - 132, ALAN KATHMAN, ERIC JOHNSON 'BINARY OPTICS: NEW DIFFRACTIVE ELEMENTS FOR THE DESIGNER'S TOOL KIT'
- DER SPIEGEL, vol., no.31, 1991, HAMBURG,DE, page 176 - 178, 'KREISE GERIFFELT'
- OPTICAL ENGINEERING, vol.28, no.6, 6.1989, page 605 - 608, GARY J. SWANSON, WILFRID B. VELKAMP 'DIFFRACTIVE OPTICAL ELEMENTS FOR USE IN INFRARED SYSTEMS'

## Beschreibung

Die Erfindung betrifft einen Zielsuchkopf für Flugkörper mit einem optischen Abbildungssystem und einem Detektor, wobei Abbildungssystem und Detektor hinter einer Abdeckung in definierter Lage zu dieser angeordnet sind, wobei die Abdeckung den Lichtdurchtritt zu dem Abbildungssystem im Wellenlängenbereich des Detektors zuläßt und eine aerodynamisch optimierte Form mit einer zentralen Spitze auf der Längsachse des Flugkörpers und einer kantenlosen Mantelfläche aufweist und auch im Bereich des Strahlenganges des optischen Abbildungssystems eine gekrümmte Fläche bildet, und wobei in dem Strahlengang zusätzlich ein diffraktives optisches Element zur Korrektur der Abbildung vorgesehen ist.

Der Zielsuchkopf hat die Aufgabe, Zielsignale zu erzeugen, die zur Steuerung des Flugkörpers zum Ziel verwendet werden. Zu diesem Zweck werden aus den Signalen des Detektors durch Signalverarbeitung Lenksignale für den Flugkörper gewonnen. Als Suchkopf wird bevorzugt ein passiver, bildverarbeitender Suchkopf verwendet, der im infraroten Spektralbereich arbeitet. Das optische Abbildungssystem und der Detektor sitzen in der Spitze des Flugkörpers und sind durch eine Abdeckung, welche den Lichtdurchtritt zu dem Abbildungssystem und dem Detektor jedenfalls in dem benutzten Wellenlängenbereich zuläßt, geschützt. Für Hochgeschwindigkeits-Flugkörper sind das optische Abbildungssystem und der Detektor üblicherweise starr in fester Lage zu der Abdeckung angeordnet. Der Detektor ist eine zweidimensionale Anordnung von Detektorelementen.

Durch die starre Anordnung von abbildendem optischen System und Detektor sind keine beweglichen Teile vorhanden, die bei hohen Beschleunigungen Probleme mit sich bringen könnten. Außerdem können durch eine solche starre Anordnung die Serienkosten erheblich gesenkt werden.

Es ist bekannt, als Eingangsfenster von Suchköpfen Dome in Form von Kugelabschnitten vorzusehen. Ein solcher sphärischer Dom mit konstanter Wandstärke hat die optische Wirkung einer Linse geringer Brechkraft. Diese Brechkraft kann bei der Auslegung des optischen Abbildungssystems berücksichtigt werden. Dadurch tritt keine Verschlechterung in der Qualität der Abbildung ein.

Es ist auch bekannt, als Eingangsfenster für Infrarot-Suchköpfe in Flugkörpern plane Scheiben vorzusehen. Solche planen Scheiben haben keinen Einfluß auf die Qualität der Abbildung des optischen Abbildungssystems. Beispielsweise beschreibt die EP-A-0,482,353 einen Suchkopf für einen Flugkörper, bei welchem der Vorderteil des Flugkörpers unsymmetrisch ist. Die Spitze des Flugkörpers ist gegenüber der Längsachse des Flugkörpers seitlich versetzt und nimmt einen Radar-Sucher auf. An die Spitze schließt sich ein planes Fenster an, durch welches hindurch der Strahlengang eines Infrarot-Suchers verläuft.

Mit höheren Geschwindigkeiten werden die beiden vorgenannten Fenstertypen jedoch aerodynamisch ungünstig. Der Luftwiderstand steigt stark an. Hierdurch heizen sich die Fenster stark auf. Die Strukturfestigkeit der Fenster ist nicht mehr gewährleistet. Die Aufheizung der Fenster beeinträchtigt die Funktion des auf Infrarotstrahlung ansprechenden Suchers.

Die aerodynamisch günstige Form der Frontseite eines Hochgeschwindigkeits-Flugkörpers ist die Form eines Kegels oder, wenn ein größeres Bauvolumen erreicht werden soll, einer Ogive. In solche Formen läßt sich ein planes Fenster nur unvollkommen seitlich einpassen. Das gilt insbesondere dann, wenn das Fenster breit sein muß, um eine ausreichende Eintrittsapertur oder einen großen Schielwinkel zu ermöglichen. Es entstehen Kanten. Diese Kanten beeinflussen die Aerodynamik des Flugkörpers ungünstig. Vor allem führen solche Kanten zur Aufheizung.

Es ist weiterhin bekannt, einen Infrarot-Dom in Form von Facetten der aerodynamisch idealen Kegelform anzunähern. Auch dabei treten aber Kanten auf, die zu einer starken Aufheizung führen und das Infrarot-Bild am Detektor des Suchers stören.

Ein aerodynamisch ideales Fenster, das sich ohne Kanten in eine Kegel- oder Ogivenoberfläche einpaßt, erzeugt Abbildungsfehler.

Der Erfindung liegt die Aufgabe zugrunde, einen Infrarot-Suchkopf zu schaffen, der
eine optimale Anpassung der Spitze des Flugkörpers an die aerodynamischen Erfordernisse gestattet,
- eine scharfe Abbildung der beobachteten Objektszene auf dem Detektor gewährleistet und
- die Verwendung eines optischen Abbildungssystems von geringen Abmessungen und geringem Gewicht gestattet.

Erfindungsgemäß wird diese Aufgabe dadurch gelöst, daß
(a) der Detektor ein auf infrarote Strahlung ansprechender Detektor ist und
(b) der Strahlengang des Abbildungssystems außermittig zu der Flugkörperachse verläuft, so daß der Strahlengang des Abbildungssystems unter Ausschuß der Spitze die Mantelfläche der Abdeckung durchsetzt und
(c) zur Korrektur der durch die Abdeckung bewirkten, stark unsymmetrischen Phasendeformation in dem Strahlengang des Abbildungssystems zusätzlich ein diffraktives optisches Element mit Oberflächen-Reliefmustern angeordnet ist, die mit einer photolithographischen Masken- und Ätztechnik nach einem rechnererzeugten Design hergestellt sind.

Durch die auch im Bereich des Strahlenganges gekrümmte Fläche der Abdeckung wird eine aerodynamisch optimierte Form der Spitze des Flugkörpers ermöglicht. Dafür treten aber starke Phasendeformationen des einfallenden Lichtes auf. Diese Phasendeformationen sind nicht rotationssymmetrisch. Dadurch kann zur Korrektur keine einfache Linse benutzt werden. Die Erfindung beruht auf der Erkenntnis, daß diese Korrektur durch ein diffraktives optisches Element erfolgen kann, bei welchem Oberflächen-Reliefmuster mit einer Masken- und Ätztechnik nach einem rechnererzeugten Design hergestellt sind. Solche diffraktiven optischen Elemente haben ein geringes Gewicht. Sie sind kompakt. Ein diffraktives optisches Element gestattet eine nahezu beliebige Phasenkorrektur.

Diffraktive optische Elemente sind Mikrostrukturen, die der Makrostruktur einer Fresnel-Linse ähneln. Durch ihre Gitterstruktur und Abmessungen im Bereich der verwendeten Wellenlänge ist das Funktionsprinzip von diffraktiven optischen Elementen die Beugung, durch welche die Wellenfront einer einfallenden Welle in der gewünschten Weise beeinflußt wird. Die Gitterstruktur weist eine zweidimensionale lokale Variation der Gitterperiode auf. Jeder Gittersteg bildet ein dreidimensionales Relief oder Phasenprofil. Die zweidimensionale Gitterperiode bestimmt die optische Funktion. Die dreidimensionale Struktur der Gitterstege bestimmt den Wirkungsgrad der Beugung.

Diffraktive optische Elemente sind an sich beispielsweise aus einer Veröffentlichung von Swanson und Veldkamp "Diffractive optical elements for use in infrared systems" in "Optical Engineering" Juni 1989, Band 28, Seiten 605 - 608 bekannt. Die dort beschriebenen diffraktiven optischen Elemente werden aufgrund des Herstellungsverfahrens "binäre optische Elemente" genannt. Es ist aus dieser Druckschrift auch bekannt, solche diffraktiven optischen Elemente in Verbindung mit einer konventionellen Linse zur Korrektur von Abbildungsfehlern vorzusehen.

Aus einem Aufsatz von Kathman und Johnson "Binary Optics: New Diffractive Elements for the Designer's Tool Kit" in "Photonics Spectra", 1992, 125-132 ist es bekannt, durch stark asymmetrische binäre optische Elemente Abbildungsfehler in komplexen optischen Systemen zu korrigieren.

In einem Aufsatz "Kreise geriffelt" in DER SPIEGEL, 31/1991. 176-178 wird auf die Anwendung binärer Optik bei Zieloptiken für Raketen und andere Waffensysteme hingewiesen.

Die CA-A-1 117 331 beschreibt eine holographische Korrekturplatte für ,,Laser Designators". Dabei wird ein Ziel z.B. von einem Flugzeug aus durch einen Laserstrahl markiert. Der Laser erzeugt einen Lichtfleck auf dem Ziel und bezeichnet auf diese Weise das Ziel. Ein Lenkgeschoß wird dann durch einen Sucher auf den Lichtfleck gelenkt. Der Sucher ist durch einen im Querschnitt spitzbogenförmigen Dom abgedeckt. Zur Korrektur von Bildverzerrungen ist dort eine holographische Korrekturplatte dargestellt. Diese Korrekturplatte ist zentral zur Achse des Flugkörpers angeordnet oder in den spitzbogenförmigen Dom integriert. Die Art und der Aufbau des Suchers sind dort nicht näher dargestellt.

Der Laser emittiert bei solchen Laser-Zielmarkierungsgeräten im Sichtbaren mit einer einzigen, wohl definierten Wellenlänge. Nur das Laserlicht wird von dem Sucher verarbeitet. Da nur ein von dem Laser erzeugter Lichtfleck erfaßt werden soll, sind die Anforderung an die Qualität der Abbildung relativ gering.

Bei der Erfindung geht es jedoch um die Kombination einer aerodynamisch optimalen Ausbildung der Abdeckung eines Flugkörpers mit Mitteln zur Korrektur der dadurch wieder hervorgerufenen Abbildungsfehler bei einem Infrarot-Sucher, der ein hochaufgelöstes Bild eines Gesichtsfeldes für die weitere Bildverarbeitung in einem breiten Band von Infrarotstrahlung erzeugt. Durch die Erfindung wird es möglich, Sucher dieser Art für Flugkörper zu bauen, die mit Hyperschall-Geschwindigkeit fliegen, also mit einer Geschwindigkeit von mehr als Mach 3.

Ausgestaltungen der Erfindung sind Gegenstand der Unteransprüche.

Ausführungsbeispiele der Erfindung sind nachstehend unter Bezugnahme auf die zugehörigen Zeichnungen näher erläutert.
- Fig.1 ist: eine schematische Darstellung, teilweise im Schnitt, der aerodynamisch optimierten Spitze eines Flugkörpers mit einem Fenster und den dahinter angeordneten optischen Bauteilen, wobei der Detektor und das abbildende optische System in fester Lage außermittig in der konischen Spitze des Flugkörpers angeordnet sind.
- Fig.2 zeigt: schematisch einen Längsschnitt einer Spitze eines Flugkörpers mit einem in definierte Lagen verschwenkbaren Strahlengang und einer Wechselvorrichtung für diffraktive optische Elemente.
- Fig.3 zeigt: schematisch einen Längsschnitt einer Spitze eines Flugkörpers mit einem in definierte Lagen verschwenkbaren Strahlengang, wobei der Strahlengang in den verschiedenen Lagen über je ein in Reflexion arbeitendes, diffraktives optisches Element geleitet ist.

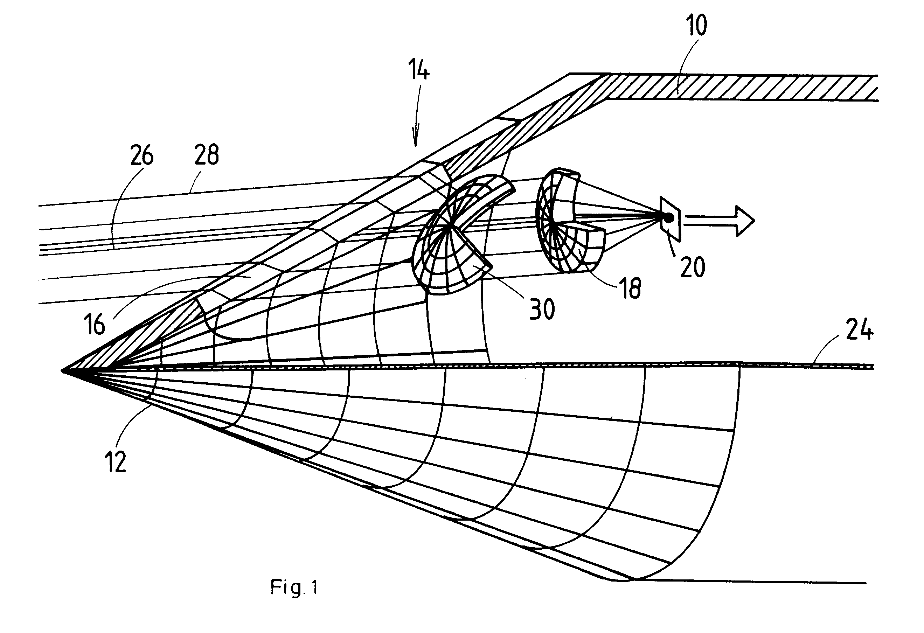

In Fig.1 ist mit 10 die Zelle eines Flugkörpers bezeichnet. Der Flugkörper weist eine Spitze 12 auf. Die Spitze 12 enthält einen Suchkopf 14. Die Spitze 12 bildet eine Abdeckung für den Suchkopf 14.

Die Spitze 12 ist konisch. Das ist eine für einen im Hyperschallbereich mit mehr als Mach 3 fliegenden Hochgeschwindigkeits-Flugkörper eine optimale Form. Statt der konischen Form kann auch eine Ogivenform vorgesehen sein. In der konischen Spitze 12 ist ein für infrarote Strahlung durchlässiges Fenster 16 vorgesehen. Das Fenster 16 ist vollständig an die konische Form der übrigen Spitze 12 angepaßt. Dadurch sind um das Fenster 16 herum keinerlei Kanten gebildet, die aerodynamisch ungünstig wären und bei Hyperschall-Geschwindigkeit zu unzulässiger Erwärmung führen würde.

Der Suchkopf 14 enthält ein optisches Abbildungssystem 18, das durch eine infrarotdurchlässige Linse dargestellt ist. Das optische Abbildungssystem 18 erzeugt ein Bild einers im Unendlichen liegenden Objektszene auf einem infrarotempfindlichen Detektor 20. Der infrarotempfindliche Detektor 20 ist in bekannter Weise eine zweidimensionale Anordnung von Detektorelementen. Der Detektor 20 liefert Daten entsprechend den Bildelementen (Pixeln) des von dem optischen Abbildungssystem 18 auf dem Detektor 20 erzeugten Bildes der Objektszene. Diese Daten werden einer Signalverarbeitung zur Bildverarbeitung und Erzeugung von Lenksignalen zugeführt. Das ist durch Pfeil 22 angedeutet.

Der Detektor 20 und das optische Abbildungssystem 18 sind starr in fester Lage zu der Spitze 12 angeordnet. Mit 24 ist die Längsachse des Flugkörpers bezeichnet, welche mit der Kegelachse der konischen Spitze 12 zusammenfällt. Die optische Achse 26 des optischen Abbildungssystems 18 verläuft parallel zu der Längsachse 24 des Flugkörpers, ist aber gegenüber dieser zur Seite versetzt. Das optische Abbildungssystem sitzt hinter dem Fenster 16. Der Strahlengang 28 des optischen Abbildungssystems 18 verläuft durch dieses Fenster 16 hindurch.

Das Fenster 16 ist eine zu dem Strahlengang 28 geneigte Kegelschale. Dieses Fenster bewirkt daher starke und in bezug auf die optische Achse 26 unsymmetrische Phasendeformationen in dem abbildenden infraroten Lichtbündel. Diese Phasendeformationen würden zu erheblichen, mit Linsen praktisch nicht korrigierbaren Abbildungsfehlern führen.

Zur Korrektur der Phasendeformationen ist daher im Strahlengang 28 des optischen Abbildungssystems 18 ein diffraktives optisches Element 30 ebenfalls strukturfest angeordnet. Das diffraktive optische Element 30 ist ein binäres optisches Element. Die Einbaulage des diffraktiven optischen Elements ergibt sich aus einem Optimierungsprozess der optischen Funktion und des Wirkungsgrades.

Binäre optische Elemente enthalten ein rechnererzeugtes Design von mikroskopischen Oberflächen-Reliefmustern. Diese Oberflächen-Reliefmuster werden mit Masken- und Ätztechniken hergestellt, wie sie auch bei der Herstellung von integrierten Schaltungen angewandt werden. Dadurch, daß nacheinander N binäre, d.h. zweistufige Masken mit einer entsprechenden Anzahl von Ätzschritten angewandt werden, wird das theoretische Phasenprofil durch 2^{N} Phasenstufen angenähert.

Zunächst erfolgt eine rechnerunterstützte Auslegung und Codierung der Phasenfunktion des binären optischen Elements. Danach wird eine Maske mittels eines Elektronenstrahl-Mustergenerators hergestellt. Das Substrat für das binäre optische Element wird vorbereitet. Darauf erfolgt die Lithographie und das Ätzen. Die Oberflächen der binären optischen Elemente müssen mittels bekannter Techniken vergütet werden.

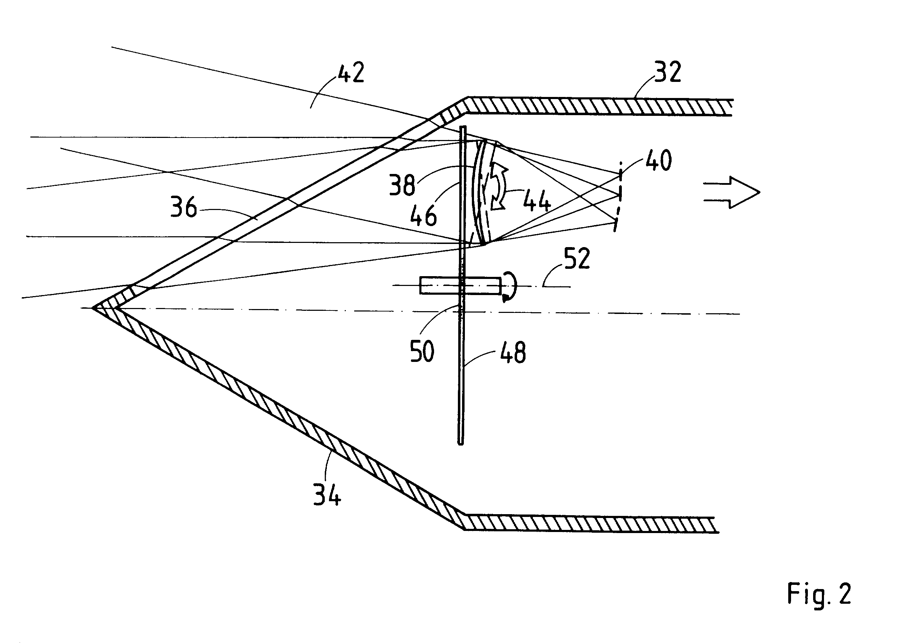

In Fig.2 ist mit 32 die Zelle eines Flugkörpers bezeichnet. Der Flugkörper weist eine konische Spitze 34 auf. In der konischen Spitze 34 ist wieder ein Fenster 36 vorgesehen, das an die Oberfläche der konischen Spitze 34 angepaßt ist. Das Fenster 36 ist für die infrarote Nutzstrahlung durchlässig.

Mit 38 ist ein optisches Abbildungssystem bezeichnet. Das optische Abbildungssystem bildet eine Objektszene auf einen Detektor 40 ab. Der Detektor 40 ist eine zweidimensionale Anordnung von Detektorelementen. Bei der Ausführung nach Fig.2 ist die gesamte Anordnung von optischem Abbildungssystem 38 und Detektor 40 mit dem Strahlengang 42 durch strahlengangschwenkende Mittel 44 zwischen zwei definierten Lagen verschwenkbar. Die strahlengangschwenkenden Mittel 44 sind in Fig.2 durch einen Doppelpfeil angedeutet. In Fig.2 sind beide Lagen des Strahlenganges und des Detektors angedeutet. In den beiden Stellungen verläuft der Strahlengang 42 unter verschiedenen Einfallswinkeln durch unterschiedliche Teile des Fensters 36. Es werden dementsprechend durch das Fenster 36 unterschiedliche Abbildungsfehler hervorgerufen. Zur Korrektur dieser Abbildungsfehler sind zwei diffraktive optische Elemente 46 und 48 vorgesehen. Die beiden diffraktiven optischen Elemente 46 und 48 sind in einer nach Art eines Filterrades aufgebauten Scheibe 50 gehaltert. Die Scheibe 50 ist um eine Achse 52 drehbar. Die strahlengangschwenkenden Mittel 44 sind mit einem Antrieb für die Scheibe 50 so gekoppelt, daß in der in Fig.2 oberen Lage des Strahlenganges 42 das diffraktive optische Glied 46 und in der in Fig.2 unteren Lage des Strahlenganges 42 das diffraktive optische Glied 48 im Strahlengang 42 angeordnet ist. Die Ebene der Scheibe 50 und der diffraktiven optischen Glieder 46 und 48 verläuft dicht objektseitig vor dem optischen Abbildungssystem 38. Dadurch erfolgt in der Ebene des Rades 50 bei der Verschwenkung des Strahlenganges 42 nur eine geringe seitliche Verschiebung des Bündelquerschnitts.

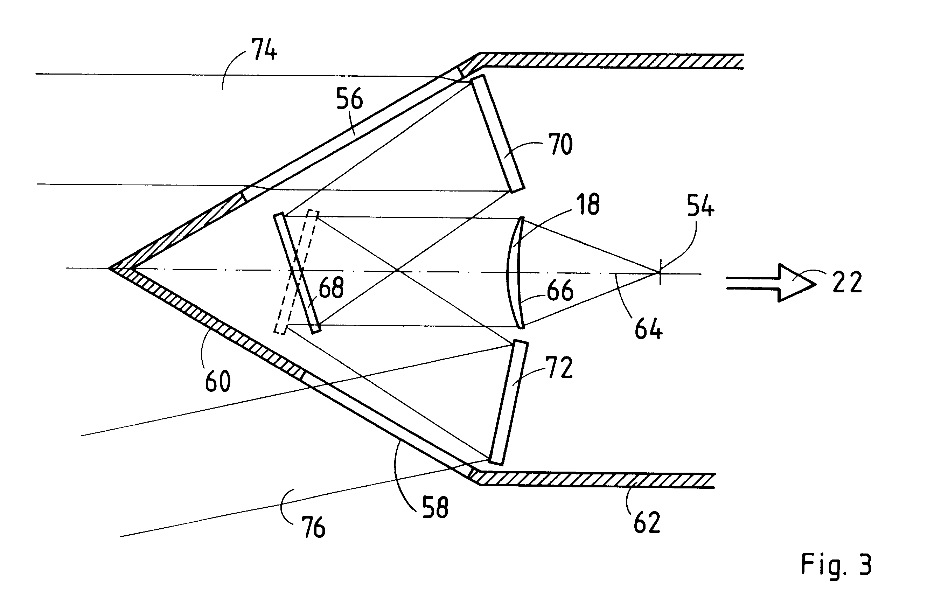

Fig.3 zeigt einen Flugkörper, bei welchem ein Strahlengang von einer Objektszene zu einem Detektor 54 wahlweise durch ein erstes Fenster 56 oder durch ein zweites Fenster 58 verläuft. Die Fenster 56 und 58 sind in einer konischen Spitze 60 eines Flugkörpers 62 vorgesehen. Der Detektor 54 ist bei dieser Ausführung flugkörperfest auf der Flugkörper- und Kegelachse 64 angeordnet. Die Objektszene wird durch ein ebenfalls flugkörperfest auf der Flugkörper- und Kegelachse 64 angeordnetes optisches Abbildungssystem 66 auf den Detektor 54 abgebildet. Der Strahlengang verläuft über einen Schwenkspiegel 68. Der Schwenkspiegel 68 ist zwischen zwei definierten Stellungen umschaltbar. Eine erste Stellung ist in Fig.3 in ausgezogenen Linien dargestellt. Die zweite Stellung ist gestrichelt gezeichnet. Der Schwenkspiegel 68 liegt optisch zwischen dem optischen Abbildungssystem 66 und dem Fenster 56 bzw. 58. Es sind weiter flugkörperfest angeordnet zwei diffraktive optische Elemente 70 und 72 vorgesehen. Die beiden diffraktiven optischen Elemente 70 und 72 arbeiten in Reflexion. In der ersten Stellung des Schwenkspiegels 68 verläuft ein Strahlengang 74 durch das Fenster 56, über das diffraktive optische Element 70, den Schwenkspiegel 68 und das optische Abbildungssystem 66 zum Detektor 54. In der zweiten Stellung des Schwenkspiegels 68 verläuft ein Strahlengang 76 durch das Fenster 58, über das diffraktive optische Element 72, den Schwenkspiegel 68 und das optische Abbildungssystem 66 zum Detektor 54. Die Fenster 56 und 58 sind nicht symmetrisch angeordnet. Der Strahlengang 74 verläuft im wesentlichen parallel zu der Flugkörper- und Kegelachse 64. Der Strahlengang 76 dagegen bildet mit der Flugkörper- und Kegelachse 64 einen spitzen Winkel.

## Patentansprüche

1. Zielsuchkopf für Flugkörper mit einem optischen Abbildungssystem (18) und einem Detektor (20), wobei Abbildungssystem (18) und Detektor (20) hinter einer Abdeckung in definierter Lage zu dieser angeordnet sind, wobei die Abdeckung den Lichtdurchtritt zu dem Abbildungssystem (18) im Wellenlängenbereich des Detektors (20) zuläßt und eine aerodynamisch optimierte Form mit einer zentralen Spitze auf der Längsachse des Flugkörpers und einer kantenlosen Mantelfläche aufweist und auch im Bereich des Strahlenganges (28) des optischen Abbildungssystems (18) eine gekrümmte Fläche bildet, und wobei in dem Strahlengang (28) zusätzlich ein diffraktives optisches Element (30) zur Korrektur der Abbildung vorgesehen ist,
**dadurch gekennzeichnet, daß**
(a) der Detektor (20) ein auf infrarote Strahlung ansprechender Detektor mit einer zweidimensionalen Anordnung von Detektorelementen ist und
(b) der Strahlengang (28) des Abbildungssystems (18) außermittig zu der Flugkörperachse (24) verläuft, so daß der Strahlengang (28) des Abbildungssystems (18) unter Ausschluß der Spitze die Mantelfläche der Abdeckung (12) durchsetzt und
(c) zur Korrektur der durch die Abdeckung bewirkten, stark unsymmetrischen Phasendeformation in dem Strahlengang (28) des Abbildungssystems (18) zusätzlich ein diffraktives optisches Element (30) mit Oberflächen-Reliefmustern angeordnet ist, die mit einer photolithographischen Masken- und Ätztechnik nach einem rechnererzeugten Design hergestellt sind.

2. Zielsuchkopf nach Anspruch 1, **dadurch gekennzeichnet, daß** das diffraktive optische Element (30) ein binäres optisches Element ist.

3. Zielsuchkopf nach Anspruch 1 oder 2, **dadurch gekennzeichnet, daß** das diffraktive optische Element (70,72) in Reflexion arbeitet.

4. Zielsuchkopf nach einem der Ansprüche 1 bis 3, **dadurch gekennzeichnet, daß** das diffraktive optische Element (30;46,48) in Transmission arbeitet.

5. Zielsuchkopf nach einem der Ansprüche 1 bis 4, **dadurch gekennzeichnet, daß**
(a) die Abdeckung (12) von einer konischen Spitze des Flugkörpers gebildet ist, die eine Kegelachse (24) definiert,
(b) auf der Mantelfläche der Abdeckung (12) im Strahlengang (28) des Abbildungssystems (18) und des diffraktiven optischen Elements (30) ein sich in die konische Mantelfläche (12) kantenlos einfügendes transparentes Fenster (16) vorgesehen ist

6. Zielsuchkopf nach einem der Ansprüche 1 bis 4, **dadurch gekennzeichnet, daß**
(a) die Abdeckung (12) von einer ogivenförmigen Spitze des Flugkörpers gebildet ist, die eine Achse (24) definiert, und
(b) auf der Mantelfläche der Abdeckung (12) im Strahlengang (28) des Abbildungssystems (18) und des diffraktiven optischen Elements (30) ein sich in die ogivenförmige Mantelfläche (12) kantenlos einfügendes transparentes Fenster (16) vorgesehen ist.

7. Zielsuchkopf nach Anspruch 5 oder 6, **dadurch gekennzeichnet, daß** das optische Abbildungssystem außermittig zu der Kegelachse starr im Flugkörper angeordnet ist.

8. Zielsuchkopf nach einem der Ansprüche 1 bis 4, dadurch gekennzeichnet, daß
(a) der Strahlengang (74,76) des Abbildungssystems (66) durch strahlengangschwenkende Mittel (68) in verschiedene, definierte Lagen relativ zu der Abdeckung (60) verschwenkbar ist und
(b) bei jeder der definierten Lagen des Strahlengangs (74,76) ein diffraktives optisches Element (70,72) im Strahlengang (74,76) angeordnet ist, durch welches der in der betreffenden Lage auftretende Abbildungsfehler korrigiert wird.

9. Zielsuchkopf nach Anspruch 8, **dadurch gekennzeichnet, daß** das optische Abbildungssystem (38) mit dem Detektor (40) durch die strahlengangschwenkenden Mittel (44) in zwei definierte Lagen verschwenkbar ist.

10. Zielsuchkopf nach Anspruch 9, **dadurch gekennzeichnet, daß** in Transmission arbeitende diffraktive optische Elemente (46,48) in einem in verschiedene Lagen schwenkbaren Träger (50) sitzen, der zusammen mit den strahlengangschwenkenden Mitteln so betätigbar ist, daß für jede der definierten Lagen des Strahlenganges das zugehörige diffraktive Element in den Strahlengang geschwenkt wird.

11. Zielsuchkopf nach Anspruch 10, **dadurch gekennzeichnet, daß** der Träger (50) nach Art eines Filterrades ausgebildet ist.

12. Zielsuchkopf nach Anspruch 3, **dadurch gekennzeichnet, daß**
(a) die Spitze (60) des Flugkörpers (62) zwei Fenster (56,58) aufweist,
(b) das optische Abbildungssystem (66) und der Detektor (54) flugkörperfest angeordnet sind,
(c) die strahlengangschwenkenden Mittel von einem Schwenkspiegel (68) gebildet sind, der optisch zwischen dem optischen Abbildungssystem (66) und den Fenstern (56,58) angeordnet und zwischen zwei definierten Stellungen verschwenkbar ist, und
(d) zwei flugkörperfest angeordnete, in Reflexion arbeitende, diffraktive optische Elemente (70,72) vorgesehen sind, wobei bei einer der definierten Stellungen des Schwenkspiegels (68) der Strahlengang (74) über den Schwenkspiegel (68) und eines der diffraktiven optischen Elemente (70) durch das eine der beiden Fenster (56) und bei der anderen definierten Stellung des Schwenkspiegels (68) der Strahlengang (76) über den Schwenkspiegel (68) und das andere diffraktive optische Element (72) durch das andere der beiden Fenster (58) geleitet ist.

## Claims

1. Target seeking head for missiles with an optical imaging system (18) and a detector (20), the optical imaging system (18) and detector (20) being arranged behind a cover in a well-defined position thereto, the cover allowing the entrance of light to the imaging system (18) in the wavelength range of the detector (20) and an aerodynamic optimised shape with a central tip on the longitudinal axis of the missile is provided with an edgeless peripheral surface and also forms a curved surface in the region of the path of rays (28) of the optical imaging system (18) and a diffractive optical element (30) is provided for the correction of the image,
**characterised in that**
(a) the detector (20) is a detector which responds to infrared radiation and
(b) the path of rays (28) of the imaging system (18) extends off-centre to the axes of the missile (24) such that the path of rays (28) of the imaging system (18) passes through the peripheral surface of the cover with the exclusion of the tip.
(c) additionally a diffractive optical element (30) with surface relief patterns which are produced by a photo lithographic masking and etching technique according to a computer generated design is arranged in the path of rays (28) of the imaging system (18) for the correction of the highly asymmetric phase deformation caused by the cover.

2. Target seeking head according to claim 1, **characterised in that,** the diffractive optical element (30) is a binary optical element.

3. Target seeking head according to claim 1 or 2, **characterised in that**, the diffractive optical element (70,72) operates in reflection.

4. Target seeking head according to anyone of the claims 1 to 3, **characterised in that**, the diffractive optical element (30;46;48) operates in transmission.

5. Target seeking head according to claim 1 or 4, **characterised in that**
(a) the cover (12) is formed of a conical tip of the missile which defines a cone axis (24),
(b) an edgeless transparent window (16) which fits into the conical peripheral surface (12) is provided on the peripheral surface of the cover (12) in the path of rays (28) of the imaging system (18) and the diffractive optical element (30).

6. Target seeking head according to one of the claims 1 to 4, **characterised in that**
(a) the cover (12) is formed of an ogive shaped tip of the missile which defines a cone axis (24),
(b) an edgeless transparent window (16) which fits into the ogive shaped peripheral surface (12) is provided on the peripheral surface of the cover (12) in the path of rays (28) of the imaging system (18) and the diffractive optical element (30).

7. Target seeking head according to claim 5 or 6, **characterised in that**, the optical imaging system is arranged rigidly in the missile, off-centre to the cone axis.

8. Target seeking head according to one of the claims 1 to 4, **characterised in that**
(a) the path of rays (74,76) of the imaging system (66) is deflectable in different well-defined positions relative to the cover (60) by the deflecting means of the path of rays (68) and
(b) in each of the well-defined positions of the path of rays (74,76), a diffractive optical element (70,72) is arranged in the path of rays (74,76) by which the imaging errors occurring in the position concerned are corrected.

9. Target seeking head according to claim 8, **characterised in that**, the optical imaging system (38) with the detector (40) are deflectable into two well-defined positions by the path of rays deflecting means (44).

10. Target seeking head according to claim 9, **characterised in that**, diffractive optical elements (46,48) operating in transmission located in a carrier (50), movable into different positions, are arranged to be actuated together with the path of rays deflecting means, such that for each of the well-defined positions of the path of rays the associated diffractive element is moved into the path of rays.

11. Target seeking head according to claim 10, **characterised in that**, the carrier (50) is of a filter wheel type.

12. Target seeking head according to claim 3, **characterised in that**,
(a) the tip (60) of the missile (62) is provided with two windows (56,58),
(b) the optical imaging system (66) and the detector (54) are missile-fixed,
(c) the path of rays deflecting means is formed by an oscillating mirror (68) which is arranged optically between the optical imaging system (66) and the windows (56,58) and is deflectable between two well-defined positions.
(d) two missile-fixed diffractive optical elements (70,72) operating in reflection are provided, the path of rays (74) being guided through one of the windows (56) by means of the oscillating mirror (68) and via one of the diffractive optical element (70) in one of the well-defined positions of the oscillating mirror (68), and in the other well-defined position of the oscillating mirror (68) the path of rays (76) is guided through the other one of the two windows (58) by means of the oscillating mirror (68) and via the other diffractive optical element (72).

## Revendications

1. Tête chercheuse de cibles pour des missiles munie d'un système optique de reproduction (18) et d'un détecteur (20), le système de reproduction (18) et le détecteur (20) étant disposés derrière un cache dans une situation définie par rapport à ce dernier, le cache permettant le pénétration de la lumière vers le système de reproduction (18) dans le domaine de longueur d'onde du détecteur (20) et présentant une forme optimalisée du point de vue aérodynamique ayant une tête centrale située sur l'axe longitudinal du missile et une surface de manteau sans arêtes et formant également, dans le domaine de la marche des rayons (28) du système optique de reproduction (18), une surface courbée, et un élément optique de diffraction (30) destiné à corriger la reproduction étant en plus prévu dans la marche des rayons (28),
**caractérisée par le fait que**
(a) le détecteur (20) est un détecteur répondant à un rayonnement infrarouge ayant une disposition bidimensionnelle d'éléments de détecteur et
(b) la marche des rayons (28) du système de reproduction (18) s'étend excentriquement par rapport à l'axe du missile (24) de telle façon que la marche des rayons (28) du système de reproduction (18) traverse la surface de manteau du cache (12) en évitant la tête et
(c) afin de corriger la déformation des phases fortement asymétrique provoquée par le cache, un élément optique de diffraction (30) ayant des motifs superficiels en relief fabriqués avec une technique de gravure et de masquage photolithographique d'après une conception informatisée est en plus disposé dans la marche des rayons (28) du système de reproduction (18).

2. Tête chercheuse de cibles selon la revendication 1, **caractérisée par le fait que** l'élément optique de diffraction (30) est un élément optique binaire.

3. Tête chercheuse de cibles selon la revendication 1 ou 2, **caractérisée par le fait que** l'élément optique de diffraction (70,72) travaille par réflexion.

4. Tête chercheuse de cibles selon l'une des revendications 1 à 3, **caractérisée par le fait que** l'élément optique de diffraction (30;46,48) travaille par transmission.

5. Tête chercheuse de cibles selon l'une des revendications 1 à 4, **caractérisée par le fait que**
(a) le cache (12) est formé par une tête conique du missile qui définit un axe conique (24),
(b) une fenêtre (16) transparente s'encastrant sans arête dans la surface de manteau conique (12) est prévue sur la surface de manteau du cache (12) dans la marche des rayons (28) du système de reproduction (18) et de l'élément optique de diffraction (30).

6. Tête chercheuse de cibles selon l'une des revendications 1 à 4, **caractérisée par le fait que**
(a) le cache (12) est formé par une tête du missile en forme d'ogive qui définit un axe (24), et
(b) une fenêtre (16) transparente s'encastrant sans arête dans la surface de manteau en forme d'ogive (12) est prévue sur la surface de manteau du cache (12) dans la marche des rayons (28) du système de reproduction (18) et de l'élément optique de diffraction (30).

7. Tête chercheuse de cibles selon la revendication 5 ou 6, **caractérisée par le fait que** le système optique de reproduction est disposé rigidement dans le missile et excentriquement par rapport à l'axe conique.

8. Tête chercheuse de cibles selon l'une des revendications 1 à 4, **caractérisée par le fait que**
(a) la marche des rayons (74,76) du système de reproduction (66) est susceptible d'être pivotée par des moyens de pivotement de la marche des rayons (68) dans différentes situation définies par rapport au cache (60) et
(b) un élément optique de diffraction (70,72) est disposé dans la marche des rayons (74,76) pour chacune des situations définies de la marche des rayons (74,76), élément par lequel l'erreur de reproduction apparaissant dans la situation rentrant en ligne de compte est corrigée.

9. Tête chercheuse de cibles selon la revendication 8, **caractérisée par le fait que** le système optique de reproduction (38) est susceptible d'être pivoté avec le détecteur (40) par les moyens de pivotement de la marche des rayons (44) dans deux situations définies.

10. Tête chercheuse de cibles selon la revendication 9, **caractérisée par le fait que** des éléments optiques de diffraction (46,48) travaillant par transmission se trouvent dans un support (50) susceptible de pivoter dans différentes situations, support qui est susceptible d'être actionné conjointement avec les moyens de pivotement de la marche des rayons de telle façon que, pour chacune des situations définies de la marche des rayons, l'élément de diffraction associé est pivoté dans la marche des rayons.

11. Tête chercheuse de cibles selon la revendication 10, **caractérisée par le fait que** le support (50) est développé à la façon d'une roue filtrante.

12. Tête chercheuse de cibles selon la revendication 3, **caractérisée par le fait que**
(a) la tête (60) du missile (62) présente deux fenêtres (56,58),
(b) le système optique de reproduction (66) et le détecteur (54) sont disposés fixement par rapport au missile,
(c) les moyens de pivotement de la marche des rayons sont formés par un miroir pivotant (68) qui est disposé du point de vue optique entre le système optique de reproduction (66) et les fenêtres (56,58) et qui est susceptible d'être pivoté entre deux positions définies, et
(d) deux éléments optiques de diffraction (70,72) travaillant par réflexion et disposés fixement par rapport au missile sont prévus, la marche des rayons (74) étant guidée, pour l'une des positions définies du miroir pivotant (68), par l'intermédiaire du miroir pivotant (68) et de l'un des éléments optiques de diffraction (70) à travers l'une des deux fenêtres (56) et, pour l'autre position définie du miroir pivotant (68), la marche des rayons (76) étant guidée par l'intermédiaire du miroir pivotant (68) et de l'autre élément optique de diffraction (72) à travers l'autre fenêtre (58).
